# EUROPÄISCHE PATENTSCHRIFT

(11) **EP 1 892 511 B1**
(45) Veröffentlichungstag und Bekanntmachung des Hinweises auf die Patenterteilung: **26.10.2011**
(21) Anmeldenummer: 07114664.1
(22) Anmeldetag: 21.08.2007
(51) Int. Cl.: G01L 3/22

(54) **Elektrische Antriebs- und Belastungsmaschine für Hochleistungs-Prüfstände**
Electric drive and load machine for high power test beds
Machine électrique d'entraînement ou de charge pour bancs d'essai à haute puissance

(30) Priorität: 24.08.2006 AT 6362006 U
(43) Veröffentlichungstag der Anmeldung: 27.02.2008
(73) Patentinhaber: AVL List GmbH, 8020 Graz (AT)
(72) Erfinder: List, Helmut, 8010, Graz (AT); Strohschein, Wolfram, 8111, Judendorf-Straßengel (AT); Höllrigl, Reinhard, 8045, Graz (AT)
(74) Vertreter: Pinter, Rudolf

(56) Entgegenhaltungen:
- EP-A1- 0 441 298
- WO-A1-98/44325
- DE-A1- 19 913 199
- US-A- 3 135 111

## Beschreibung

Die Erfindung betrifft eine elektrische Antriebs- und Belastungsmaschine für Hochleistungs-Prüfstände, ausgebildet insbesonders als aktiv mit Kühlmedium gekühlte, permanentmagneterregte Synchronmaschine, mit einem an das zu prüfende Aggregat koppelbaren Rotor mit geringem Trägheitsmoment.

Elektrische Maschinen für den Antrieb bzw. das Abbremsen verschiedenster Maschinen- und Fahrzeugkomponenten auf Prüfständen sind in vielfältigsten Ausführungen bekannt und ermöglichen die Prüfung beispielsweise von Brennkraftmaschinen, Getrieben, Antriebssträngen und deren Teilen unter realitätsnahen Bedingungen, ohne dass tatsächlich der Prüfling mit den ihn in der Realität belastenden Nachbaraggregaten verbunden oder in ein tatsächliches Fahrzeug eingebaut sein musste. Damit können einzelne Komponenten, wie etwa ein Getriebe, auch vollkommen unabhängig von dem dieses in der Realität treibenden Motor und den davon in weiterer Folge angetriebenen Teile des Antriebsstranges geprüft, entwickelt und optimiert werden, was große Vorteile bietet. Die für übliche Anwendungen bekannten Elektromaschinen haben aber zumindest im Hochleistungsbereich - verglichen mit realen Brennkraftmaschinen mit gleicher Leistung bzw. gleichem Drehmoment - viel zu hohe Trägheitsmomente, was realitätsnahe Prüfmethoden behindert oder unmöglich macht - hohe Leistungen und Drehmomente der Elektromaschinen zusammen mit geringsten Trägheitsmomenten sind deshalb ein Ziel, das eine für Hochleistungs-Prüfstände (wie insbesonders etwa für Formel 1-Getriebeentwicklungen oder dgl.) zu erreichende Voraussetzung ist.

Geringe Trägheitsmomente der Elektromaschinen erfordern möglichst geringe Rotordurchmesser, was bei den angestrebten hohen Leistungen (Formel 1-Brennkraftmaschinen bringen größenordnungsmäßig durchaus 700 bis 1.000 PS bei 20.000 U/min und mehr an die Getriebeeingangswelle) enorme Probleme mit der auf kleinstem Raum entstehenden und zur Ermöglichung eines Dauerbetriebes auch permanent abzuführenden Verlustwärme bringt. Die für derartige Anwendungen bereits bekannt gewordene Verwendung permanentmagneterregter Synchronmaschinen ermöglicht zwar gegenüber sonstigen geeigneten Elektromaschinen relativ sehr hohe Wirkungsgrade von typischerweise über 96 % (verglichen mit etwa 92 % für übliche Induktionsmotoren) - es bleibt aber doch bei einer angestrebten Leistung von zumindest kurzzeitig bis zu 1.000 PS die bei hohen Frequenzen auftretende große Verlustleistung, die in Form von Wärme permanent abzuführen ist, was bisher bei den angestrebten niedrigsten Trägheitsmomenten (größenordnungsmäßig etwa 0,01 kg m²) nicht zu realisieren war.

Aufgabe der vorliegenden Erfindung ist es, eine elektrische Maschine der eingangs genannten Art so zu verbessern, dass bei geringstem Trägheitsmoment des an das zu prüfende Aggregat koppelbaren Rotors hohe Dauerleistungen durch sichere permanente Abfuhr der Verlustwärme möglich werden.

Diese Aufgabe wird gemäß der vorliegenden Erfindung bei einer elektrischen Maschine der eingangs genannten Art dadurch gelöst, dass zur Kühlung des in an sich bekannter Weise hohl ausgebildeten Rotors von der dem anzukoppelnden Aggregat abgewandten Seite her eine rohrförmige, nicht mitdrehende Lanze in den Rotor ragt, deren äußeres Ende einen Anschluss für die Zufuhr von gasförmigem Kühlmedium und die im Inneren des Rotors zumindest eine Austrittsöffnung aufweist, dass der Rotor beidseitig im Bereich der Wickelköpfe des Stators ausmündende Ventilationsöffnungen aufweist und dass am Gehäuse der Maschine im Bereich um die Wickelköpfe des Stators verteilte Austrittsöffnungen für das Kühlmedium angeordnet sind. Hohl ausgebildete Rotoren sind dabei an sich beispielsweise aus US 3 588 290, US 5 130 585 oder US 6 727 609 bekannt und dort auch zumindest zum Teil schon durch Zufuhr von gasförmigem Kühlmedium in den Innenraum gekühlt worden. Die Erfindung geht nun diesbezüglich weiter und verwendet eine in den hohlen Rotor ragende, rohrförmige Lanze, womit das gasförmige Kühlmedium gezielt zu Austrittsöffnungen im Inneren des Rotors gebracht und dort mit in weiten Grenzen wählbaren Strömungseigenschaften gegen die zu kühlenden Oberflächen gerichtet werden kann. Das gasförmige Kühlmedium strömt dann im Ringspaltbereich zwischen der nicht mitdrehenden Lanze und der Innenwand des Rotors ab und kann beidseitig im Bereich der Wickelköpfe des Stators über die Ventilationsöffnungen austreten und damit auch die thermisch ebenfalls hochbelasteten Wickelköpfe des Stators kühlen, bevor es das Gehäuse der Maschine über entsprechend platzierte Austrittsöffnungen verlässt.

An der Einschubseite der Lanze kann in bevorzugter Ausgestaltung der Erfindung ein Ringspalt zum Rotor offen bleiben, über den Kühlmedium aus dem Rotor austreten kann, womit dieser in vorteilhafter Weise bis zu den dortigen Lagern gekühlt wird. Die der Einschubseite der Lanze gegenüberliegende Seite des Rotors kann entweder - vorzugsweise über eine Drosselöffnung - offen oder aber mit einem Anbauflansch oder einer sonstigen geeigneten Verbindung für eine anzutreibende Getriebewelle oder ein ähnliches Aggregat abgeschlossen sein.

Die Lanze weist in besonders bevorzugter Ausgestaltung der Erfindung einen gegenüber dem Innendurchmesser des Rotors nur geringfügig kleineren Außendurchmesser und mehrere, in Längsrichtung der Lanze verteilte Austrittsöffnungen auf, die bevorzugt auch spiralartig über die Länge der Lanze am Umfang verteilt angeordnet sein können. Es kann damit eine sehr hohe Strömungsgeschwindigkeit im Ringspalt zwischen Lanze und Rotor erhalten werden, was zusammen mit entsprechend dimensionierten Austrittsöffnungen aus der Lanze einerseits eine hohe Auftreffgeschwindigkeit des Kühlmediums auf die Innenwand des Rotors, und damit die gewünschte Durchdringung der zu Folge der Fliehkraft an der Rotorwand anhaftenden Laminarströmung, sicherstellt und andererseits einen ausreichenden Wärmeabtransport über das gasförmige Kühlmedium ermöglicht. Die Verteilung der Austrittsöffnungen über die Länge der Lanze ermöglicht eine weitgehend gleichmäßige Kühlung des thermisch hochbelasteten, die Magnete tragenden Teils des Rotors.

Die Ventilationsöffnungen des Rotors in Richtung zu den Wickelköpfen des Stators sind bevorzugt mit sich von innen nach außen erweiterndem Querschnitt ausgebildet, was die an sich bereits durch die Fliehkraft unterstützte Ausströmung des gasförmigen Kühlmediums aus dem Rotor weiter unterstützt.

Die Austrittsöffnungen der Lanze können in weiterer Ausgestaltung der Erfindung entlang der Längsachse des Rotors auch verstellbar sein, vorzugsweise indem die Lanze in der Längsachse des Rotors verschieblich ist, womit gezielt bestimmte Bereiche bevorzugt gekühlt werden können.

In weiters bevorzugter Ausgestaltung der Erfindung sind zusätzlich der Stator und/oder die Statorwicklungen und/oder das Gehäuse und/oder die Lagerschilde in an sich bekannter Weise zusätzlich mit Kühlkanälen versehen, welche vorzugsweise von flüssigem Kühlmittel im geschlossenen Kreislauf durchströmbar sind. Dabei ist eine weitere Ausgestaltung der Erfindung von besonderem Vorteil, gemäß welcher die dem Rotor unmittelbar gegenüberliegenden Polschuhe der Statorwicklungen mit durchgehenden Kühlkanälen, vorzugsweise ausgebildet in Kühlrohren, versehen sind, die beidseits nach außen über elektrisch nichtleitende Anschlussstücke verbunden und mit einer elektrisch nichtleitenden Kühlflüssigkeit, vorzugsweise destilliertem Wasser mit zugesetzten Inhibitoren, durchströmbar sind. Auf Grund von Ummagnetisierung und Wirbelströmen erhitzt sich das Stator-Blechpaket sehr stark, wobei dieser Effekt durch die zur Ermöglichung einer hohen Dynamik bei großen Leistungen zum Einsatz kommenden hohen Drehfrequenzen (typischerweise über 1 kHz) noch verstärkt werden. Neben der an sich bekannten Wassermantelkühlung, die einen Großteil der Statorwärme abführen kann, dient die beschriebene Polschuhkühlung zur effektiven und räumlich optimal platzierten Kühlung der Polschuhe selbst, welche einen Bereich extrem hoher Temperatur darstellen, die durch Wärmeabstrahlung auch unmittelbar auf den Rotor übertragen wird. Die Verwendung einer nichtleitenden Flüssigkeit, vorzugsweise mit entsprechenden Zusätzen, die verhindern, dass sich durch chemische Reaktionen Ladungsträger in der Flüssigkeit bilden, womit die Flüssigkeit sukzessive leitend würde, ermöglicht eine effektive direkte Kühlung der Polschuhe ohne nachteilige Einflüsse auf das magnetische Verhalten.

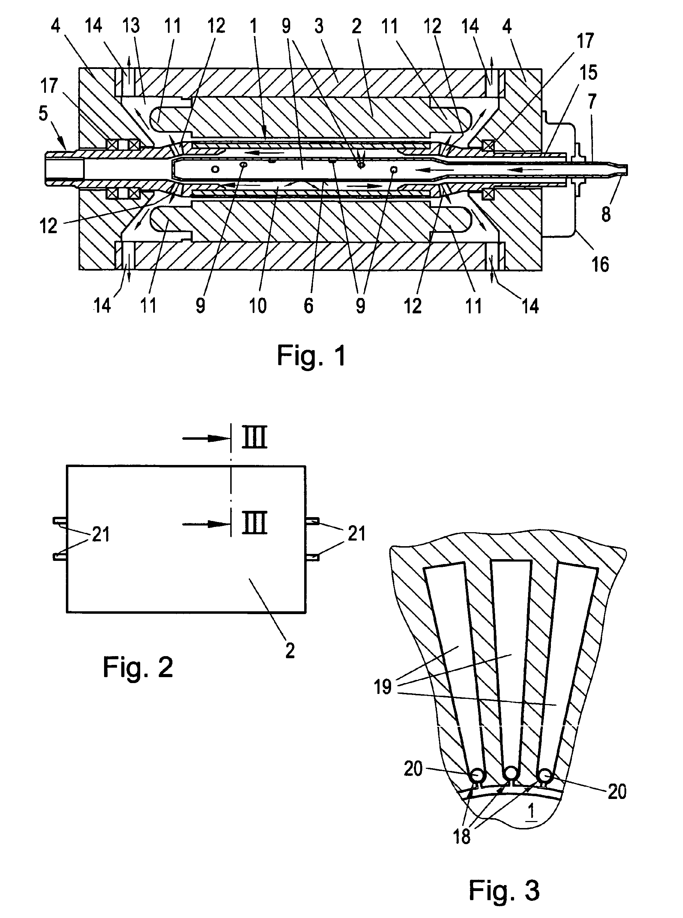

Die Erfindung wird im folgenden noch an Hand der in der Zeichnung schematisch dargestellten Ausführungsbeispiele näher erläutert. Fig. 1 zeigt dabei einen Längsschnitt durch eine erfindungsgemäße Elektromaschine, Fig. 2 symbolisch das mit einer Polschuhkühlung versehene Statorpaket einer erfindungsgemäßen Elektromaschine und Fig. 3 einen Detailschnitt entlang der Linie III-III in Fig. 2 in vergrößertem Maßstab.

Die elektrische Antriebs- bzw. Belastungsmaschine gemäß Fig. 1 ist als permanentmagneterregte Synchronmaschine ausgebildet, was höchste Leistungsdichten und einen hohen Wirkungsgrad ermöglicht. Durch die Ausbildung des an das nicht dargestellte, zu prüfende Aggregat koppelbaren Rotors 1 als Hohlwelle mit geringem Trägheitsmoment kann die Elektromaschine mit hoher Leistung und hochdynamisch steuerbar beispielsweise für Hochleistungs-Prüfstände zur Prüfung von Getrieben, Antriebssträngen oder dgl. eingesetzt werden. Nachdem das geringe Trägheitsmoment des Rotors 1 eine ziemlich drastische Verkleinerung insbesonders des Rotordurchmessers erfordert, baut die gesamte Elektromaschine sehr klein, was Probleme im Hinblick auf die abzuführende Verlustwärme bedeutet. Um die bei Gesamtleistungen von größenordnungsmäßig etwa 1.000 PS Spitzenleistung anfallende Verlustwärme von größenordnungsmäßig etwa 70 kW im Dauerbetrieb sicher abführen zu können, ist abgesehen von hier nicht dargestellten üblichen Flüssigkeitskühlungen beispielsweise des Stators 2 und des Gehäuses 3 bzw. der Lagerschilde 4 zur Kühlung des Rotors 1 selbst von der dem nicht dargestellten (im Bereich des Endes 5 des Rotors 1 anzukoppelnden) zu prüfenden Aggregat abgewandten Seite 15 her eine rohrförmige, nicht mitdrehende Lanze 6 in den Rotor 1 eingeschoben, deren äußeres Ende 7 einen Anschluss 8 für die Zufuhr von gasförmigem Kühlmedium aufweist. Das gegenüberliegende Ende der Lanze 6 ist bevorzugt verschlossen, kann aber auch Austrittsöffnungen aufweisen. Im Inneren des Rotors 1 sind Austrittsöffnungen 9 an der Lanze 6 vorgesehen, die auf deren Außenumfang spiralartig über die Länge verteilt angeordnet sind, und das über den Anschluss 8 zuströmende Kühlmedium gezielt mit hoher Strömungsgeschwindigkeit gegen die Innenwandung des Rotors 1 ausblasen. Damit wird der dort bei den hohen Drehzahlen des Rotors 1 von 20.000 U/min und mehr zu Folge der Fliehkraft anhaftende, weitgehend laminare Kühlmediumfilm aufgerissen und eine effektive Kühlung der Innenwand des Rotors 1 erzielt. Das aus der Lanze 6 ausgetretene Kühlmedium strömt mit hoher Geschwindigkeit durch den Ringspalt 10 zwischen Lanze 6 und Rotor 1 beidseits in Richtung zu den äußeren Enden des Rotors 1 und tritt bevorzugt an beidseits im Bereich der Wickelköpfe 11 des Stators 2 ausmündenden Ventilationsöffnungen 12 in den Gehäuseinnenraum 13 aus. Am Gehäuse 3 sind im Bereich um die Wickelköpfe 11 des Stators 2 verteilt Austrittsöffnungen 14 für das gasförmige Kühlmedium angeordnet, über welche dieses entweder frei in die Atmosphäre ausgeblasen oder aber auf nicht dargestellte Weise auch rückgekühlt und rückgeführt wird.

In der dargestellten Ausführung gelangt ein Teil des in den Ringspalt 10 ausgeblasenen Kühlmediums auch entlang der Lanze 6 nach rechts wieder aus dem rechten Ende 15 des Rotors 1 nach außen und wird über ein Sammelgehäuse 16, welches die Lanze 6 trägt, abgeführt. An der gegenüberliegenden Seite 5 des Rotors 1 kann dieser entweder verschlossen sein oder eine entsprechend reduzierte Durchtrittsöffnung für Kühlmedium aufweisen, womit die Bereiche der Lager 17 auf beiden Seiten des Rotors 1 mitgekühlt werden könnten.

Die Lanze 6 weist hier einen Außendurchmesser auf, der geringfügig kleiner als der Innendurchmesser des Rotors 1 im Bereich der Lager 17 ist, womit die Lanze 6 ohne weiteres von der Seite des Sammelgehäuses 16 her in den Rotor 1 eingeschoben und bedarfsweise auch in ihrer axialen Position verstellt werden kann. Davon abgesehen könnte die Lanze 6 aber auch einen zumindest bereichsweise näher an den Innenumfang des Rotors 1 reichenden Außenumfang aufweisen, müsste aber dann vor dem Zusammenbau des inneren, weiteren Rotorteiles mit den äußeren, engeren Lagerteilen eingesetzt werden.

Die Ventilationsöffnungen 12 des Rotors 1 sind hier mit sich von innen nach außen erweiterndem Querschnitt dargestellt - davon abgesehen könnten diese Öffnungen aber auch einfach gerade oder beispielsweise auch nach Art einer Kreiselpumpe gebogen ausgeführt werden, um die Ausströmung des Kühlmediums in Richtung der Wickelköpfe 11 zu beeinflussen bzw. zu verbessern. Ähnliches gilt auch für die Austrittsöffnungen 9 an der Lanze 6, die bedarfsweise zur Beeinflussung der Ausströmung des Kühlmediums speziell gestaltet werden können.

Wie aus Fig. 2 und 3 ersichtlich ist, können die dem Rotor 1 unmittelbar gegenüberliegenden Polschuhe 18 der Statorwicklungen 19 mit durchgehenden Kühlkanälen 20, vorzugsweise ausgebildet in separat eingesetzten Kühlrohren, versehen sein, die beidseits nach außen über elektrisch nichtleitende Anschlussstücke 21 verbunden sind und mit einer elektrisch nichtleitenden Kühlflüssigkeit durchströmbar sind. Auf diese Weise wird der thermisch hochbelastete Bereich der Polschuhe direkt gekühlt, ohne die magnetischen Eigenschaften der Anordnung zu beeinflussen.

## Patentansprüche

1. Elektrische Antriebs- und Belastungsmaschine für Hochleistungs-Prüfstände, ausgebildet insbesonders als aktiv mit Kühlmedium gekühlte, permanentmagneterregte Synchronmaschine, mit einem an das zu prüfende Aggregat koppelbaren Rotor (1) mit geringem Trägheitsmoment, **dadurch gekennzeichnet, dass** zur Kühlung des in an sich bekannter Weise hohl ausgebildeten Rotors (1) von der dem anzukoppelnden Aggregat abgewandten Seite (15) her eine rohrförmige, nicht mitdrehende Lanze (6) in den Rotor (1) ragt, deren äußeres Ende (7) einen Anschluss (8) für die Zufuhr von gasförmigem Kühlmedium und die im Inneren des Rotors (1) zumindest eine Austrittsöffnung (9) aufweist, dass der Rotor (1) beidseitig im Bereich der Wickelköpfe (11) des Stators (2) ausmündende Ventilationsöffnungen (12) aufweist und dass am Gehäuse (3) der Maschine im Bereich um die Wickelköpfe (11) des Stators (2) verteilte Austrittsöffnungen (14) für das Kühlmedium angeordnet sind.

2. Maschine nach Anspruch 1, **dadurch gekennzeichnet, dass** an der Einschubseite (15) der Lanze (6) ein Ringspalt zum Rotor (1) offen bleibt, über den Kühlmedium aus dem Rotor (1) austreten kann.

3. Maschine nach Anspruch 1 oder 2, **dadurch gekennzeichnet, dass** die Lanze (6) einen gegenüber dem Innendurchmesser des Rotors (1) nur geringfügig kleineren Außendurchmesser und mehrere, in Längsrichtung der Lanze (6) verteilte Austrittsöffnungen (9) aufweist.

4. Maschine nach Anspruch 3, **dadurch gekennzeichnet, dass** die Austrittsöffnungen (9) der Lanze (6) auf deren Außenumfang spiralartig über die Länge verteilt angeordnet sind.

5. Maschine nach einem oder mehreren der Ansprüche 1 bis 4, **dadurch gekennzeichnet, dass** die Ventilationsöffnungen (12) des Rotors (1) mit sich von innen nach außen erweiterndem Querschnitt ausgebildet sind.

6. Maschine nach einem oder mehreren der Ansprüche 1 bis 5, **dadurch gekennzeichnet, dass** die Austrittsöffnung(en) (9) der Lanze (6) entlang der Längsachse des Rotors (1) verstellbar sind, vorzugsweise indem die Lanze (6) in der Längsachse des Rotors (1) verschieblich ist.

7. Maschine nach einem oder mehreren der Ansprüche 1 bis 6, **dadurch gekennzeichnet, dass** der Stator (2) und/oder die Statorwicklungen (19) und/oder das Gehäuse (3) und/oder die Lagerschilde (4) in an sich bekannter Weise zusätzlich mit Kühlkanälen versehen sind, welche vorzugsweise von flüssigem Kühlmittel im geschlossenen Kreislauf durchströmbar sind.

8. Maschine nach Anspruch 7, **dadurch gekennzeichnet, dass** die dem Rotor (1) unmittelbar gegenüberliegenden Polschuhe (18) der Statorwicklungen (19) mit durchgehenden Kühlkanälen (20), vorzugsweise ausgebildet in Kühlrohren, versehen sind, die beidseits nach außen über elektrisch nichtleitende Anschlussstücke (21) verbunden und mit einer elektrisch nichtleitenden Kühlflüssigkeit, vorzugsweise destilliertem Wasser mit zugesetzten Inhibitoren, durchströmbar sind.

## Claims

1. An electric drive and load machine for high-power test stands, configured in particular as a permanent magnet excited synchronous machine actively cooled with cooling medium, comprising a rotor (1) which has a low moment of inertia and can be coupled to the aggregate to be tested, **characterized in that** for cooling the rotor (1), which is formed hollowly in a manner known per se, a tubular non-rotating lance (6) projects from the side (15) facing away from the aggregate to be coupled into the rotor (1), wherein the outer end (7) of the lance has a connector (8) for supplying gaseous cooling medium and wherein the lance has at least one outlet opening (9) inside the rotor (1), that the rotor (1) has ventilation openings (12) opening out on both sides in the region of the winding heads (11) of the stator (2) and that outlet openings (14) for the cooling medium are arranged on the housing (3) of the machine in the region around the winding heads (11) of the stator (2).

2. The machine according to claim 1, **characterized in that** on the insertion side (15) of the lance (6), an annular gap to the rotor (1) remains open through which cooling medium can flow out of the rotor (1).

3. The machine according to claim 1 or claim 2, **characterized in that** the lance (6) has an outer diameter which is only slightly smaller with respect to the inner diameter of the rotor (1) and a plurality of outlet openings (9) distributed in the longitudinal direction of the lance (6).

4. The machine according to claim 3, **characterized in that** the outlet openings (9) of the lance (6) are arranged on the outer circumference of the latter and distributed in a spiral-like manner over the length of the lance.

5. The machine according to one or more of the claims 1 to 4, **characterized in that** the ventilation openings (12) of the rotor (1) are formed with a cross-section which widens from the inside towards the outside.

6. The machine according to one or more of the claims 1 to 5, **characterized in that** the outlet opening(s) (9) of the lance (6) are displaceable along the longitudinal axis of the rotor (1), preferably **in that** the lance (6) can be displaced in the longitudinal axis of the rotor (1).

7. The machine according to one or more of the claims 1 to 6, **characterized in that** the stator (2) and/or the stator windings (19) and/or the housing (3) and/or the bearing shields (4) are additionally provided in a manner known per se with cooling channels through which preferably liquid coolant can flow in a closed circuit.

8. The machine according to claim 7, **characterized in that** those pole shoes (18) of the stator windings (19) which are arranged directly opposite the rotor (1) are provided with continuous cooling channels (20), preferably configured in the form of cooling pipes, which are connected on both sides toward the outside via electrically non-conductive connecting pieces (21) and through which an electrically non-conductive coolant, preferably distilled water with added inhibitors, can flow.

## Revendications

1. Machine électrique d'entraînement et de sollicitation pour bancs d'essai à hautes performances, configurée en particulier sous la forme d'une machine synchrone, à excitation par aimants permanents et refroidie par un fluide de refroidissement, comportant un rotor (1) à faible moment d'inertie qui peut être couplé au groupe à l'essai, **caractérisé par le fait que**, pour le refroidissement du rotor (1) qui est de construction creuse de manière connue en soi, une lance (6) de forme tubulaire, qui n'est pas entraînée en rotation, pénètre dans le rotor (1) par le côté (15) opposé à celui du groupe à accoupler, dont l'extrémité extérieure (7) comporte un raccordement (8) pour l'injection d'un fluide de refroidissement gazeux et qui comporte au moins une ouverture de sortie (9) à l'intérieur du rotor (1), **par le fait que** le rotor (1) possède de part et d'autre, au niveau des têtes de bobine (11) du stator (2), des ouvertures de ventilation débouchantes (12) et **par le fait qu'**il est prévu sur le carter (3) de la machine, des ouvertures de sortie (14) pour le fluide de refroidissement distribuées au niveau des têtes de bobine (11) du stator (2).

2. Machine selon la revendication 1, **caractérisée par le fait que**, sur le côté d'insertion (15) de la lance (6), une fente annulaire reste ouverte vis-à-vis du rotor (1), par laquelle le fluide de refroidissement peut s'échapper du rotor (1).

3. Machine selon l'une des revendications 1 ou 2, **caractérisée par le fait que** la lance (6) possède un diamètre extérieur qui est seulement légèrement inférieur au diamètre intérieur du rotor (1) et plusieurs ouvertures de sortie (9) distribuées dans la direction longitudinale de la lance (6).

4. Machine selon la revendication 3, **caractérisée par le fait que** les ouvertures de sortie (9) de la lance (6) sont disposées en étant distribuées sur la longueur en forme de spirale sur sa périphérie extérieure.

5. Machine selon l'une ou plusieurs des revendications 1 à 4, **caractérisée par le fait que** les ouvertures de ventilation (12) du rotor (1) sont configurées avec une section transversale qui s'élargit de l'intérieur vers l'extérieur.

6. Machine selon l'une ou plusieurs des revendications 1 à 5, **caractérisée par le fait que** la ou les ouvertures de sortie (9) de la lance (6) sont aptes à être réglées sur l'axe longitudinal du rotor (1), de préférence du fait que la lance (6) est apte à se déplacer dans l'axe longitudinal du rotor (1).

7. Machine selon l'une ou plusieurs des revendications 1 à 6, **caractérisée par le fait que** le stator (2) et/ou les bobinages du stator ((19) et/ou le carter (3) et/ou les flasques (4) possèdent en outre, de manière connue en soi, des canaux de refroidissement qui sont de préférence aptes à être parcourus par un fluide de refroidissement liquide en circuit fermé.

8. Machine selon la revendication 7, **caractérisée par le fait que** les épanouissements polaires (18) des bobines du stator (19) immédiatement opposés au rotor (1) sont dotés de canaux de refroidissement continus (20), prenant de préférence la forme de tubes de refroidissement qui sont reliés vers l'extérieur de part et d'autre par des pièces de raccordement (21) électriquement non conductrices et qui sont aptes à être parcourus par un liquide de refroidissement électriquement non conducteur, de préférence de l'eau distillée avec des inhibiteurs ajoutés.
